# FASCICULE DE BREVET EUROPEEN

(11) **EP 1 324 870 B1**
(45) Date de publication et mention de la délivrance du brevet: **22.03.2006**
(21) Numéro de dépôt: 01972180.2
(22) Date de dépôt: 21.09.2001
(51) Int. Cl.: B29C 49/12, B29C 49/42

(54) **MACHINE D'ETIRAGE-SOUFFLAGE COMPORTANT UNE COMMANDE PERFECTIONNEE DE LA TIGE D'ETIRAGE**
STRECKBLASMASCHINE MIT EINER VERBESSERTEN STEUERUNG DES STRECKHELFERS
DRAW-BLOWING MACHINE COMPRISING IMPROVED DRAWING ROD CONTROL

(30) Priorité: 25.09.2000 FR 0012265
(43) Date de publication de la demande: 09.07.2003
(73) Titulaire: SIDEL, 76053 Le Havre Cedex (FR)
(72) Inventeur: GALLONI, Bruno, c/o SIDEL, F-76053 Le Havre Cedex (FR)
(74) Mandataire: Siloret, Patrick
(86) Numéro de dépôt international: PCT/FR2001/002941
(87) Numéro de publication internationale: WO 2002/024435

(56) Documents cités:
- EP-A- 0 824 978
- US-A- 4 214 860
- US-A- 5 585 066

## Description

L'invention se rapporte au domaine des machines de fabrication de récipients en matière thermoplastique par étirage et soufflage d'une préforme qui est précédemment réalisée par moulage par injection.

De telles machines sont notamment utilisées pour fabriquer des récipients, par exemple des bouteilles en polyéthylène téréphtalate (PET).

Dans une telle machine, on utilise des préformes sensiblement tubulaires qui sont fermées à une de leurs extrémités axiales et dont l'autre extrémité axiale est ouverte et présente déjà la forme définitive du col du récipient final.

Chaque préforme est chauffée dans un four de conditionnement thermique de manière à amener le corps de la préforme à une température supérieure à la température de transition vitreuse du matériau thermoplastique. La préforme ainsi conditionnée est transférée vers un moule de soufflage dans lequel est délimitée une cavité à la forme du récipient à obtenir. La préforme est disposée dans le moule de telle sorte que son extrémité ouverte dépasse à l'extérieur du moule. Ainsi, un dispositif de soufflage peut être amené au niveau du col de la préforme pour injecter de l'air sous pression dans la préforme. Simultanément, une tige d'étirage est introduite axialement à l'intérieur de la préforme pour venir en appui contre l'extrémité fermée du fond de la préforme, La tige d'étirage permet ainsi de commander au mieux la déformation axiale de la préforme au cours du soufflage du récipient.

L'invention pourra par exemple être mise en oeuvre dans une machine d'étlrage-souffiage de type rotatif dans lequel la machine comporte plusieurs postes de soufflage montés à la périphérie d'un carrousel qui est entraîné de manière continue en rotation autour de son axe. Chaque poste de soufflage comporte notamment un moule de soufflage, un dispositif de soufflage et un dispositif d'étirage, comme décrit par exemple dans le document US 5,585,066.

Selon une conception connue, le mouvement de la tige d'étirage est commandé par un vérin pneumatique qui fournit l'énergie nécessaire au déplacement de la tige mais la vitesse d'étirage est régulée grâce à un dispositif à galet et à came qui permet de parfaitement synchroniser la position axiale de la tige d'étirage en fonction de la position angulaire du poste de soufflage considéré autour de l'axe de rotation du carrousel.

Ces systèmes donnent entière satisfaction en termes de fonctionnement du procédé de soufflage. Toutefois, il est apparu le besoin de diminuer de manière importante la consommation globale d'énergie de ces machines de soufflage. Or, une des sources de consommation d'énergie des machines précédemment connues est constituée par les vérins de commande de la tige d'étirage de chaque poste de soufflage qu'il faut alimenter en air sous pression à la fois pour la descente et pour la remontée de la tige.

L'invention a donc pour but de proposer une solution particulièrement simple et efficace pour commander les déplacements de la tige d'étirage.

Dans ce but, l'invention propose une machine de fabrication de récipients en matière thermoplastique par étirage et soufflage d'une préforme, du type comportant au moins une tige d'étirage qui est commandée en coulissement selon son axe par un actionneur d'une position escamotée à une position d'étirage maximum pour assurer l'étirage de la préforme au cours de l'opération de soufflage, caractérisée en ce qu'elle est agencée pour que l'actionneur puisse être mis au repos lors du retour de la tige d'étirage vers sa position escamotée, de façon que le retour de la tige soit assuré par la pression de soufflage qui règne à l'intérieur du récipient en cours de la fabrication et qui agit sur l'extrémité de travail de la tige.

Selon d'autres caractéristiques de l'invention :
- la machine comporte des moyens auxiliaires pour ramener la tige vers sa position de repos en cas de disfonctionnement ;
- la machine comporte plusieurs postes de moulage qui sont montés sur un carrousel entraîné en rotation de manière continue autour de son axe par rapport à un bâti de la machine ; chaque poste est muni d'au moins une tige d'étirage ; la machine comporte une came de sécurité qui est liée au bâti, et chaque tige d'étirage comporte un suiveur de came qui est susceptible de coopérer avec la came de sécurité pour ramener la tige d'étirage vers sa position escamotée si, au passage devant la came, la tige correspondante n'a pas précédemment regagné sa position escamotée ;
- l'actionneur est un vérin à pression de fluide ;
- l'actionneur est un vérin pneumatique ;
- l'actionneur comporte une chambre de pression qui est alimentée en air comprimé pour commander la tige vers sa position d'étirage, et ladite chambre est reliée à l'air libre pour permettre le retour de la tige vers sa position escamotée ;
- l'actionneur est un actionneur simple effet ; et
- la machine comporte des moyens auxiliaires de verrouillage de la tige en position escamotée.

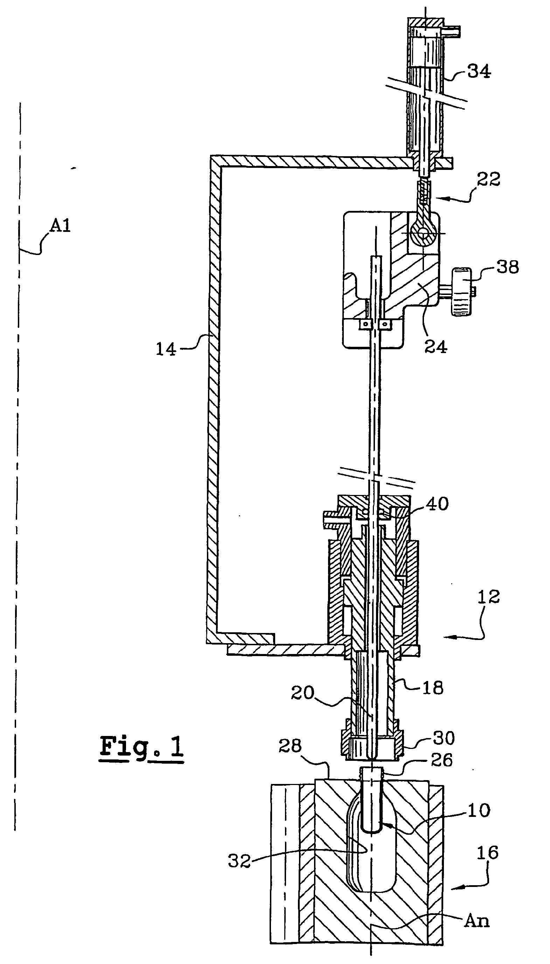

D'autres caractéristiques et avantages de l'invention apparaîtront à la lecture de la description détaillée qui suit et à la vue des dessins annexés dans lesquels les figures 1 à 4 sont des vues schématiques en coupe axiale illustrant quatre phases de fonctionnement d'un poste de soufflage conforme aux enseignements de l'invention.

On a représenté sur les figures, de manière schématique et partielle, une machine de fabrication de récipients en matériau thermoplastique par étirage et soufflage d'une préforme 10 préalablement réalisée par moulage par injection.

Plus particulièrement, cette machine est du type rotatif, c'est-à-dire qu'elle comporte plusieurs postes 12 d'étirage-soufflage montés sur un carrousel 14. Le carrousel 14 est entraîné en rotation de manière continue autour de son axe A1.

Chaque poste d'étirage soufflage 12 comporte pour l'essentiel un moule de soufflage 16, une tuyère de soufflage 18, une tige d'étirage 20 et des moyens de commande 22 des déplacements de la tige d'étirage 20.

Dans l'exemple illustré, l'axe A1 de rotation du carrousel 14 est un axe vertical et chaque poste d'étirage 12 est agencé selon un axe An vertical, les axes An étant disposés à intervalles réguliers sur un cercle autour de l'axe A1. Les préformes 10 sont soufflées avec leur extrémité ouverte tournée vers le haut de sorte que la tuyère de soufflage 18 et la tige d'étirage 20 sont agencées au-dessus du moule 16. De cette disposition découle le choix des notions de haut et de bas qui seront utilisées dans la suite du texte mais qui ne doivent pas êtres interprétées comme des limitations à la portée de l'invention.

Du fait de cette disposition, la tige d'étirage 20 de chaque poste 12 est donc amenée à être déplacée verticalement selon l'axe An correspondant entre une position haute escamotée et une position basse d'étirage maximum. Plus précisément, puisque chaque poste de soufflage procède au soufflage d'un récipient à chaque tour du carrousel 14, les tiges 20 effectuent un aller-retour entre leur positions haute et basse à chaque tour du carrousel 14.

De manière connue, les tiges 20 sont fixées à leur extrémité supérieure sur un coulisseau 24 qui peut coulisser verticalement sur un rail (non représenté) monté sur le carrousel 14. De même, chaque tige 20 s'étend axialement au travers de la tuyère de soufflage 18 correspondante de telle sorte que son extrémité inférieure puisse s'engager axialement dans une préforme emprisonnée dans une cavité du moule 16. Les tiges 20 sont par exemple cylindriques de révolution d'axe An, et elles présentent une extrémité inférieure 46 sensiblement hémisphérique destinée à venir en appui au fond de la préforme 10 pour l'étirer axialement au cours du soufflage.

Dans l'exemple illustré, la préforme 10 est engagée dans le moule 16 de telle sorte que son col 26 dépasse au-dessus de la face supérieure 28 du moule 16.

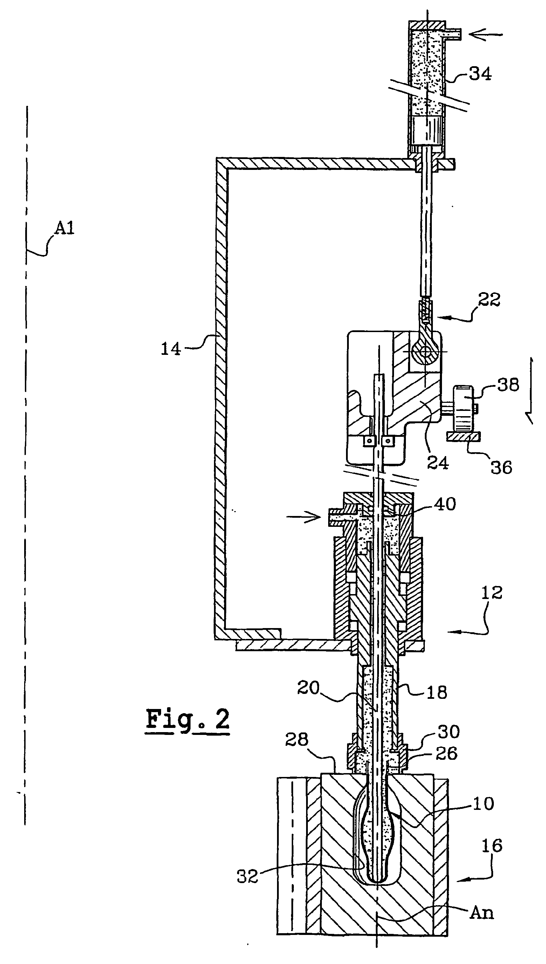

La tuyère 18 est en l'occurrence une tuyère à cloche 30 qui est mobile axialement entre une position escamotée haute (illustrée figure 1) et une position basse de soufflage (illustrée aux figures 2 à 4) dans laquelle la cloche 30 est en appui étanche sur la face supérieure 28 du moule 16, en entourant le col 26 de la préforme. Dans cette position, l'intérieur de la préforme et l'intérieur de la tuyère 18 forment une chambre fermée dans laquelle il est possible d'injecter l'air sous pression qui permet de déformer la préforme pour la plaquer contre les parois de la cavité 32 du moule 16, ceci afin de lui donner la forme du récipient que l'on veut fabriquer.

La tige 20, qui traverse axialement l'intérieur de la tuyère 18, peut coulisser de manière étanche au travers d'une paroi supérieure de la tuyère 18. Un joint d'étanchéité 40 garantit que, lorsque la tuyère est en position de soufflage, l'étanchéité du volume de soufflage est préservée malgré la possibilité de coulissement de la tige par rapport à la tuyère.

De manière connue, la tige d'étirage 20 est commandée pour accompagner la déformation de la préforme 10 en poussant le fond de la préforme vers le fond de la cavité du moule. A cet effet, le poste de soufflage comporte un actionneur qui agit sur le coulisseau 24 pour le faire coulisser axialement vers le bas. L'actionneur est par exemple un vérin pneumatique 34 à simple effet, qui, alimenté en air sous pression, force le coulisseau vers le bas. De préférence, la vitesse d'étirage est contrôlée par une came 36 qui s'étend selon une hélice autour de l'axe A1 du carrousel 14. Le coulisseau 24 comporte un galet 38 qui, sous l'action du vérin 34, vient se plaquer sur la came 36, de telle sorte que la position instantanée de la tige 20 se trouve parfaitement contrôlée en fonction de la position angulaire instantanée du poste de soufflage 12 autour de l'axe A1. Ainsi, le vérin 34 est commandé de manière très simple, en « tout ou rien », mais le moment de début d'étirage et la vitesse d'étirage sont parfaitement maîtrisés.

Comme on peut le voir sur la figure 2, la descente de la tige d'étirage se déroule généralement en même temps qu'une opération de pré-soufflage au cours de laquelle on injecte dans la préforme 10, grâce à la tuyère 18, de l'air de soufflage sous une première pression modérée, par exemple 13 bars.

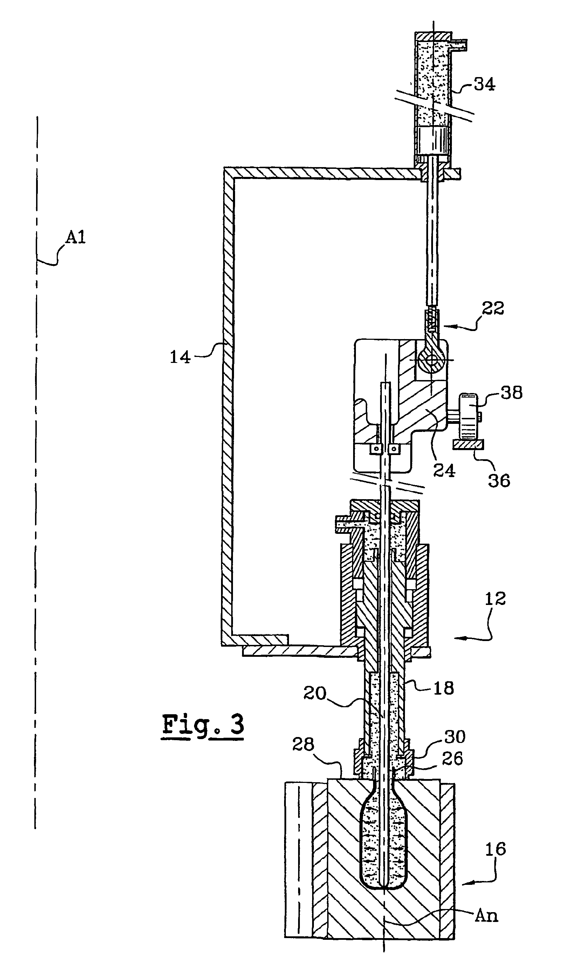

Au cours d'une étape ultérieure, illustrée à la figure 3, l'air injecté dans la préforme par la tuyère 18 est de l'air sous haute pression, par exemple de l'ordre de 40 bar, afin que le matériau thermoplastique épouse parfaitement les formes de la cavité 32. La forte pression est maintenue pendant une durée pouvant atteindre plusieurs secondes afin que le matériau thermoplastique se refroidisse et se fige au contact des parois de la cavité 32.

Tant que la matière n'a pas atteint la forme définitive du récipient, il est préférable de maintenir la tige d'étirage en position basse pour éviter toute excentration du fond de la préforme par rapport au fond de la cavité 32. Pour cela, il est nécessaire de laisser le vérin pneumatique sous pression.

Une fois que la matière a atteint sa forme définitive sous l'effet de la haute pression, il est possible de laisser remonter la tige d'étirage, ceci avant même la fin de la phase de refroidissement de la matière.

Selon l'invention, la remontée de la tige 20 n'est pas commandée par l'actionneur. Au contraire, ce dernier est laissé au repos. Dans le cas du vérin 34, sa chambre de commande est tout simplement mise à l'air libre.

A ce moment là, la tige 20, sous le simple effet de la pression de soufflage qui règne dans le récipient en cours de formation, tend à remonter vers sa position escamotée. En effet, du fait de la présence du joint d'étanchéité 40, seule la partie inférieure de la tige 20 est exposée à la pression de soufflage.

Si les effets de la pression sur les parois verticales de la tige 20 s'annulent entre eux, l'effet de la pression sur l'extrémité inférieure 46 de la tige n'est pas compensée. La tige 20 est donc alors soumise à un effort axial dirigé vers le haut qui est égal à la pression de soufflage multipliée par la surface transversale de la tige en section. Suivant les cas, cet effort peut être de l'ordre de 50 à 150 daN, ce qui est largement suffisant pour compenser le poids de la tige 20 et de son mécanisme de commande, et pour ainsi provoquer le retour de la tige vers sa position escamotée.

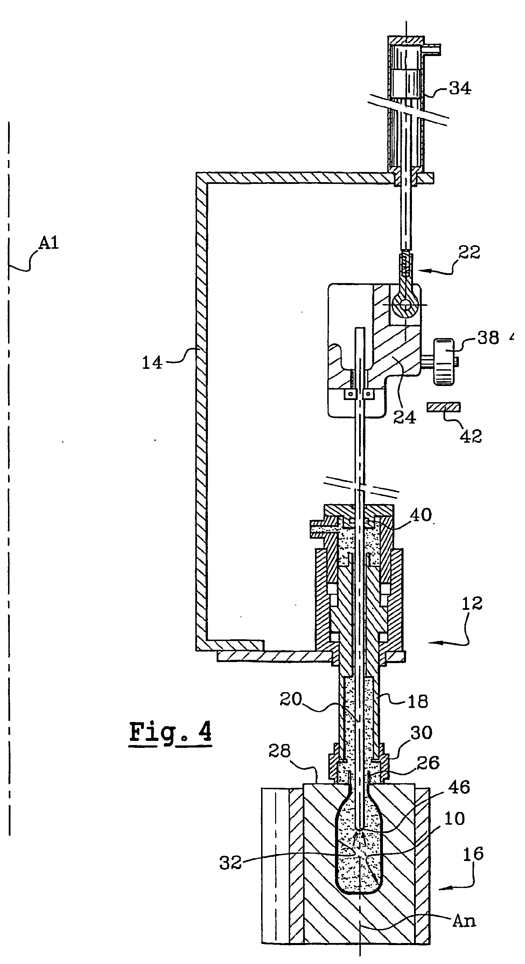

Comme on peut le voir sur la figure 4, il est préférable de prévoir une came de sécurité 42 qui est analogue à la came de régulation mais qui est configurée pour forcer le retour de la tige 20 vers sa position escamotée si le galet 38 vient à son contact. De préférence, cette came de sécurité 42 est positionnée de manière à ne pas être utilisée en cas de fonctionnement normal du dispositif, le galet 38 ne venant alors pas en contact avec la came 42, comme illustré à la figure 4. Cela permet de limiter le bruit de fonctionnement du dispositif et de limiter l'usure de la came 42 et du galet 38.

La came de sécurité 42 permet d'être sûr que la tige 20 est dégagée du moule 16 lorsqu'on veut éjecter le récipient en fin de moulage même si, par exemple à la suite de l'éclatement de la préforme 10 au cours du soufflage, l'air sous pression s'échappe du moule.

De préférence, il sera aussi prévu des moyens de verrouillage de la tige 20 en position escamotée.

L'invention vient d'être décrite dans le cas où le poste de soufflage est muni d'un moule 16 ne comportant qu'une cavité. Elle pourra aussi être mise en oeuvre dans le cas d'un poste de soufflage à double cavité comportant deux tiges d'étirage commandées par le même actionneur.

De même, l'invention pourra être mise en oeuvre dans le cadre de machines de soufflage dans lesquelles l'opération d'étirage-soufflage est effectuée avec le col de la préforme orienté vers le bas.

## Revendications

1. Machine de fabrication de récipients en matière thermoplastique par étirage et soufflage d'une préforme (10), du type comportant au moins une tige d'étirage (20) qui est commandée en coulissement selon son axe (An) par un actionneur (34) d'une position escamotée à une position d'étirage maximum pour assurer l'étirage de la préforme (10) au cours de l'opération de soufflage,
**caractérisée en ce qu'**elle est agencée pour que l'actionneur (34) puisse être mis au repos lors du retour de la tige d'étirage (20) vers sa position escamotée, de façon que le retour de la tige (20) soit assuré par la pression de soufflage qui règne à l'intérieur du récipient en cours de la fabrication et qui agit sur l'extrémité de travail (46) de la tige (20).

2. Machine selon la revendication 1, **caractérisée en ce qu'**elle comporte des moyens auxillaires (36, 38) pour ramener la tige (20) vers sa position de repos en cas de disfonctionnement.

3. Machine selon la revendication 2, **caractérisée en ce qu'**elle comporte plusieurs postes de moulage (12) qui sont montés sur un carrousel (14) entraîné en rotation de manière continue autour de son axe (A1) par rapport à un bâti de la machine, **en ce que** chaque poste (12) est muni d'au moins une tige d'étirage (20), **en ce que** la machine comporte une came de sécurité (36) qui est liée au bâti, et **en ce que** chaque tige d'étirage (20) comporte un suiveur de came (38) qui est susceptible de coopérer avec la came de sécurité (36) pour ramener la tige d'étirage (20) vers sa position escamotée si, au passage devant la came (36), la tige (20) correspondante n'a pas précédemment regagné sa position escamotée.

4. Machine selon l'une, quelconque des revendications précédentes, **caractérisée en ce que** l'actionneur (34) est un vérin à pression de fluide.

5. Machine selon la revendication 4, **caractérisée en ce que** l'actlonneur est un vérin pneumatique (34).

6. Machine selon la revendication 5, **caractérisée en ce que** l'actionneur (34) comporte une chambre de pression qui est alimentée en air comprimé pour commander la tige (20) vers sa position d'étirage, et **en ce que** ladite chambre est reliée à l'air libre pour permettre le retour de la tige (20) vers sa position escamotée.

7. Machine selon l'une quelconque des revendications précédentes, **caractérisée en ce que** l'actionneur est un actionneur simple effet.

8. Machine selon l'une quelconque des revendications précédentes, **caractérisée en ce qu'**elle comporte des moyens auxiliaires de verrouillage de la tige (20) en position escamotée.

## Patentansprüche

1. Maschine zur Herstellung von Behältern aus thermoplastischem Material durch Strecken und Blasen eines Vorformlings (10), von der Art, die mindestens eine Reckstange (20) umfasst, die an ihrer Achse (An) entlang gleitend von einer eingezogenen Position in eine Höchstreckposition zum Sicherstellen des Streckens des Vorformlings (10) während des Blasvorgangs von einem Stellglied (34) gesteuert wird,
**dadurch gekennzeichnet, dass** sie angeordnet ist, damit das stellglied (34) in den Ruhezustand gebracht werden kann, wenn die Reckstange (20) in ihre eingezogene Position zurückkehrt, so dass die Rückkehr der Stange (20) durch den Blasdruck sichergestellt wird, der im Innern des Behälters während der Herstellung herrscht und auf das aktive Ende (46) der Stange (20) einwirkt.

2. Maschine nach Anspruch 1, **dadurch gekennzeichnet, dass** sie Hilfsmittel (36, 38) umfasst, um bei einer Betriebsstörung die Stange (20) in ihre Ruheposition zurückzubringen.

3. Maschine nach Anspruch 2, **dadurch gekennzeichnet, dass** sie mehrere Formstationen (12) umfasst, die auf einem Karussell (14) angebracht sind, das kontinuierlich um seine Achse (A1) im Verhältnis zu einem Maschinengestell drehend angetrieben wird, dass jede Station (12) mit mindestens einer Reckstange (20) versehen ist, dass die Maschine einen Sicherheitsnocken (36) umfasst, der mit dem Gestell verbunden ist, und dass jede Reckstange (20) einen Nockenstößel (38) umfasst, der mit dem Sicherheitsnocken (36) zusammenwirken kann, um die Reckstange (20) in ihre eingezogene Position zurückzubringen, wenn beim Vorbeigehen an dem Nocken (36) die entsprechende Stange (20) nicht zuvor wieder ihre eingezogene Position eingenommen hat.

4. Maschine nach einem der vorhergehenden Ansprüche, **dadurch gekennzeichnet, dass** das Stellglied (34) ein Flüssigkeitsdruckzylinder ist.

5. Maschine nach Anspruch 4, **dadurch gekennzeichnet, dass** das Stellglied ein Druckluftzylinder (34) ist.

6. Maschine nach Anspruch 5, **dadurch gekennzeichnet, dass** das Stellglied (34) eine Druckkammer umfasst, die mit Druckluft versorgt wird, um die Stange (20) in ihre Reckposition zu steuern, und dass die Kammer mit dem Freien verbunden ist, um die Rückkehr der Stange (20) in ihre eingezogene Position zu ermöglichen.

7. Maschine nach einem der vorhergehenden Ansprüche, **dadurch gekennzeichnet, dass** das Stellglied ein Stellglied mit einfacher Wirkung ist.

8. Maschine nach einem der vorhergehenden Ansprüche, **dadurch gekennzeichnet, dass** sie Hilfsmittel zum Verriegeln der Stange (20) in der eingezogenen Position umfasst.

## Claims

1. Machine for manufacturing containers made of thermoplastic by stretching and blowing a preform (10), of the type comprising at least one drawing rod (20) which is made to slide along its axis (An) by an actuator (34) from a retracted position to a maximum-stretch position in order to stretch the preform (10) during the blowing operation,
**characterized in that** it is designed in such a way that the actuator (34) can be placed at rest as the drawing rod (20) returns to its retracted position so that the return of the rod (20) is brought about by the blowing pressure inside the container during manufacture and acting on the working end (46) of the rod (20).

2. Machine according to Claim 1, **characterized in that** it comprises auxiliary means (36, 38) for returning the rod (20) to its position of rest in the event of a malfunction.

3. Machine according to Claim 2, **characterized in that** it comprises several moulding stations (12) which are mounted on a carousel (14) continuously rotationally driven about its axis (A1) with respect to a bed of the machine, **in that** each station (12) is equipped with at least one drawing rod (20), **in that** the machine comprises a safety cam (36) connected to the bed, and **in that** each drawing rod (20) comprises a cam follower (38) capable of collaborating with the safety cam (36) to return the drawing rod (20) to its retracted position if, on filing past the cam (36), the corresponding rod (20) has not already regained its retracted position.

4. Machine according to any one of the preceding claims, **characterized in that** the actuator (34) is a fluid-pressure ram.

5. Machine according to Claim 4, **characterized in that** the actuator is a pneumatic ram (34).

6. Machine according to Claim 5, **characterized in that** the actuator (34) comprises a pressure chamber supplied with compressed air to drive the rod (20) into its drawing and stretching position and **in that** the said chamber is connected to the open air to allow the rod (20) to return to its retracted position.

7. Machine according to any one of the preceding claims, **characterized in that** the actuator is a single-acting actuator.

8. Machine according to any one of the preceding claims, **characterized in that** it comprises auxiliary means for locking the rod (20) in the retracted position.
